(19)

Europäisches Patentamt

European Patent Office

Office européen des brevets

(11) **EP 3 853 679 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **19765737.2**

(22) Anmeldetag: **12.09.2019**

(51) Internationale Patentklassifikation (IPC):
**G05B 19/4065** (2006.01)

(52) Gemeinsame Patentklassifikation (CPC):
**G05B 19/4065;** G05B 2219/37252;
G05B 2219/45152; G05B 2219/50308

(86) Internationale Anmeldenummer:
**PCT/EP2019/074385**

(87) Internationale Veröffentlichungsnummer:
**WO 2020/058087 (26.03.2020 Gazette 2020/13)**

(54) **VERFAHREN ZUR ZUSTANDSANALYSE EINES ELEKTROMECHANISCHEN FÜGESYSTEMS UND ELEKTROMECHANISCHES FÜGESYSTEM ZUR DURCHFÜHRUNG DIESES VERFAHRENS**

METHOD FOR STATE ANALYSIS OF AN ELECTROMECHANICAL JOINING SYSTEM AND ELECTROMECHANICAL JOINING SYSTEM FOR CARRYING OUT THIS METHOD

PROCÉDÉ D'ANALYSE D'ÉTAT D'UN SYSTÈME ÉLECTROMÉCANIQUE ET SYSTÈME D'ASSEMBLAGE ÉLECTROMÉCANIQUE DESTINÉ À LA MISE EN UVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2018 EP 18195998**

(43) Veröffentlichungstag der Anmeldung:
**28.07.2021 Patentblatt 2021/30**

(73) Patentinhaber: **Kistler Holding AG**
**8408 Winterthur (CH)**

(72) Erfinder: **MÜLLER, Alexander**
**73547 Lorch (DE)**

(56) Entgegenhaltungen:
**WO-A1-2005/124488       WO-A1-2016/205846**
**DE-A1- 102007 038 890       DE-A1- 102014 110 507**
**DE-U1- 20 305 789**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft ein Verfahren zur Zustandsanalyse eines elektromechanischen Fügesystems. Weiterhin betrifft die Erfindung ein elektromechanisches Fügesystem, das dazu ausgebildet ist, das erfindungsgemässe Verfahren durchzuführen.

### Stand der Technik

Aus der WO2005124488A1 ist ein Verfahren zur Zustandsanalyse eines elektrischen Antriebs zur Ansteuerung von Achsen innerhalb eines technischen Prozesses bekannt. Das bekannte Verfahren wird beispielsweise bei einem elektrischen Automatisierungssystem eingesetzt, und dient dazu, verschleissbehaftete Komponenten, wie z.B. eine Bremse, ein Getriebe, einen Riementrieb, ein Lager, einen Gewindetrieb, eine Führung, usw. zu überwachen. Insbesondere dient das bekannte Verfahren dazu, einen sich abzeichnenden Verschleiss an den genannten Komponenten frühzeitig zu erkennen. Dadurch kann beispielsweise ein Austausch der betreffenden Komponente zu einem Zeitpunkt ermöglicht werden, bei dem der Ausfall des elektrischen Automatisierungssystems zu minimierten Kosten möglich ist, beispielsweise während üblichen Wartungsintervvallen oder aber während Betriebspausen des elektrischen Automatisierungssystems. Hierzu schlägt es das aus der genannten Schrift bekannte Verfahren vor, mittels einer Überwachungseinrichtung Ist-Werte des elektrischen Antriebs und ggf. zusätzliche, mittels Sensoren erfasste zusätzliche Messwerte zu verarbeiten. Die Messwerte werden mittels eines Algorithmus verarbeitet und beispielsweise an eine geeignete Anzeigeeinheit angezeigt.

Die Anmelderin ist Herstellerin von elektromechanischen Fügesystemen, wie im Datenblatt 2160A_000-764d-02.17 dokumentiert. Elektromechanische Fügesysteme werden bei automatisierten Fügeprozessen verwendet. Das elektromechanische Fügesystem weist einen elektrischen Antrieb mit einem elektronisch kommutierten Servomotor und einen Gewindetrieb auf. Der Gewindetrieb wandelt eine Drehbewegung einer Antriebswelle des Servomotors in eine Linearbewegung. Dazu hat der Gewindetrieb eine Gewindespindel und eine Spindelmutter auf. An einem Ende der Spindelmutter ist ein Stössel zur Werkzeugaufnahme angebracht. Das elektromechanische Fügesystem weist verschleissbehaftete Komponenten wie eine Bremse, ein Getriebe, einen Riementrieb, den Gewindetrieb, Lager, eine Führung der Spindelmutter, eine Verdrehsicherung vom Stössel, usw. auf. Die Drehbewegung der Antriebswelle wird von einem Absolutwertgeber erfasst, was eine hochgenaue Positionierung vom Stössel ermöglicht. Ein Kraftsensor erfasst einen zeitlichen Verlauf von bei den Fügeprozessen wirkenden Kräften und Drehmomenten.

Die WO2016205846A1 richtet sich auf ein Verfahren zur Ermittlung einer Einsatzkennzahl eines Presswerkzeugs in einer Fügepresse. Die Fügepresse weist einen Einsatzdauer-Zeitgeber auf, der eine Einsatzzeit der Fügepresse ermittelt. Die Fügepresse weist auch eine Kraft-Messvorrichtung auf, die eine Kraftwirkung der Fügepresse ermittelt. Und die Fügepresse weist auch ein Analyse- und Auswertemodul auf, das aus der Einsatzzeit und der Kraftwirkung einen Werkzeug-Service-Stand ermittelt.

Aufgabe der vorliegenden Erfindung ist es, einen Verschleiss von Komponenten eines elektromechanischen Fügesystems frühzeitig zu erkennen, um so einen Ausfall des elektromechanischen Fügesystems weitgehend zu vermeiden.

### Offenbarung der Erfindung

Die Erfindung betrifft ein Verfahren zur Zustandsanalyse eines elektromechanischen Fügesystems gemäß Anspruch 1.

Das erfindungsgemässe Verfahren zur Zustandsanalyse eines elektromechanischen Fügesystems mit den Merkmalen des Anspruchs 1 hat den Vorteil, dass es auf besonders einfache Art und Weise die Detektion eines sich anbahnenden Verschleisses einer Komponente des elektromechanischen Fügesystems ermöglicht. Hierzu schlägt es die Lehre der Erfindung vor, die zur Zustandsanalyse erforderlichen zusätzlichen Messwerte mittels eines Sensors zu ermitteln, der zur Messung von zeitlichen Kraft- oder Drehmomentverläufen während des Fügeprozesses dient, und dass der Algorithmus der Kontrolleinrichtung die Ist-Werte mit den zusätzlichen Messwerten verknüpft.

Mit anderen Worten gesagt bedeutet dies, dass der Algorithmus der Kontrolleinrichtung Ist-Werte des elektrischen Antriebs (z.B. Stromstärke, Drehwinkelgeschwindigkeit einer Antriebswelle, usw.) mit vom Sensor im elektromechanischen Fügesystem gemessenen zusätzlichen Messgrössen (Kraft oder Drehmoment) verknüpft. Eine derartige Verknüpfung bzw. ein derartiger Quotient wird auch als Wirkungsgrad des elektromechanischen Fügesystems verstanden.

Charakteristisch für einen sich anbahnenden Verschleiss einer Komponente des elektromechanischen Fügesystems ist es typischerweise, dass zur Erzielung eines bestimmten Wertes (Kraft oder Drehmoment) gegenüber einem Neuzustand bzw. einem eingelaufenen Zustand beispielsweise eine erhöhte Stromstärke erforderlich ist. Sobald nun die angesprochene Verknüpfung bzw. das Verhältnis zwischen den Ist-Werten des elektrischen Antriebs und den zusätzlichen Messwerten im elektromechanischen Fügesystem ein bestimmtes Verhältnis unter- bzw. überschreitet, kann dieses Verhältnis im Sinne einer Warnmeldung für einen sich anbahnenden Verschleiss bzw. einen erforderlichen Austausch einer verschleissbehafteten Komponente des elektromechanischen Fügesystems interpretiert und genutzt werden.

Vorteilhafte Weiterbildungen des erfindungsgemässen Verfahrens zur Zustandsanalyse eines elektromechanischen Fügesystems sind in den Unteransprüchen aufgeführt.

Unter einem elektromechanischen Fügesystem im Sinne der Erfindung wird grundsätzlich jede Einrichtung verstanden, die dazu ausgebildet ist, einen Fügeprozess zu bewirken. Insbesondere wird darunter auch ein elektromechanisches Fügesystems zum Fügen wie Einpressen, Schrauben, Umformen wie z.B. Nieten, Clinchen, Rollieren, Verstemmen, Bördeln, Verpressen oder Druckfügen von Bauteilen verstanden.

In einer bevorzugten Variante des soweit allgemein beschriebenen erfindungsgemässen Verfahrens ist es vorgesehen, dass die Ist-Werte und die zusätzlichen Messwerte von dem Algorithmus lediglich während eines Teils der Zeitdauer des Fügeprozesses berücksichtigt werden, wobei während der berücksichtigten Zeitdauer die Ist-Werte vorzugsweise zumindest nahezu konstant sind. Hintergrund für diese bevorzugte Variante ist, dass es insbesondere zu Beginn und am Ende des Fügeprozesses zu Ungleichförmigkeiten beispielsweise bei der Stromaufnahme des elektrischen Antriebs oder aber der Drehwinkelgeschwindigkeit einer Antriebswelle des elektrischen Antriebs kommt. Demgegenüber sind die Ist-Werte des elektrischen Antriebs typischerweise in einer mittleren Phase des Fügeprozesses zumindest nahezu konstant bzw. weisen keine Spitzen auf. Insbesondere soll es der Algorithmus auch ermöglichen, ggf. vorhandene Unregelmässigkeiten während der zu berücksichtigenden Zeitdauer auszufiltern bzw. zu glätten, sodass diese Unregelmässigkeiten ggf. nicht berücksichtigt werden. Auch ist es denkbar, beispielsweise während der zu berücksichtigenden Zeitdauer sich linear ändernde Messwerte auszumitteln bzw. einen Mittelwert zu bilden.

Während es das zuletzt beschriebene Verfahren ermöglicht, die erforderlichen Zustandsgrössen während des Fügeprozesses bzw. des Betriebs des elektromechanischen Fügesystems zu erfassen, sieht es eine alternative Durchführung des Verfahrens vor, dass die Ist-Werte und die zusätzlichen Messwerte von dem Algorithmus während eines zusätzlichen Betriebs ausserhalb des Fügeprozesses berücksichtigt werden, insbesondere während eines Betriebs des elektromechanischen Fügesystems, in der das elektromechanische Fügesystem nicht kraft- oder drehmomentbeaufschlagt ist. Mit anderen Worten gesagt bedeutet, dass die Ist-Werte und die zusätzlichen Messwerte während eines "Leerhubs" des elektromechanischen Fügesystems ohne Beaufschlagung einer Abtriebsseite des elektromechanischen Fügesystems erfasst werden. Weiterhin ist es denkbar, den "Leerhub" auch während der Rückbewegungsphase eines Abtriebselements des elektromechanischen Fügesystems bis zum Fügen eines nächsten Bauteils durchzuführen, sodass kein zusätzlicher Zeitbedarf erforderlich wird.

Zur Ermittlung eines sich abzeichnenden Trends bzw. eines sich abzeichnenden Verschleisses im elektromechanischen Fügesystem ist es darüber hinaus wichtig, dass die Ist-Werte und die zusätzlichen Messwerte zu jeweils demselben Zeitpunkt (d.h. gleichzeitig) ermittelt werden, sodass der Algorithmus jeweils zu gleichen Zeitpunkten an die Kontrolleinrichtung übermittelte Ist-Werte und der zusätzlichen Messwerte miteinander verknüpft.

Wie bereits oben erläutert, ist es von besonderem Vorteil, wenn die Ist-Werte und die zusätzlichen Messwerte während einer konstanten Drehwinkelgeschwindigkeit des elektrischen Antriebs berücksichtigt werden.

Die Ist-Werte sind Werte einer Drehbewegung einer auf den Gewindetrieb wirkenden Antriebswelle des elektrischen Antriebs und/oder Ist-Werte des elektrischen Antriebs in Form der Stromaufnahme des elektrischen Antriebs. Sowohl die Drehbewegung der Antriebswelle als auch die Stromaufnahme des elektrischen Antriebs lassen sich üblicherweise mit relativ einfach bauenden Sensoren überwachen bzw. ermitteln.

Wesentlich für das frühzeitige Erkennen eines sich abzeichnenden Trends bzw. eines sich abzeichnenden Verschleisses einer verschleissbehafteten Komponente des elektromechanischen Fügesystems ist es, dass die Kontrolleinrichtung einen zeitlichen Verlauf der Verknüpfung der Ist-Werte mit den zusätzlichen Messwerten bildet bzw. auswertet. Mit anderen Worten gesagt bedeutet dies, dass es durch entsprechende Anzeigemittel, beispielsweise in Form eines Graphs auf einem Bildschirm oder aber in numerischer Darstellung ermöglicht wird, einen über die Betriebsdauer des elektromechanischen Fügesystems stattfindenden Trend hinsichtlich der miteinander verknüpften Messwerte darzustellen.

Ganz besonders vorteilhaft ist es bei letztgenannter Variante, wenn die Kontrolleinrichtung zusätzlich den zeitlichen Verlauf der Verknüpfung der Ist-Werte mit den zusätzlichen Messwerten für die Zukunft extrapoliert, d.h. hochrechnet. Ein derartiges Verfahren ermöglicht es insbesondere, eine (sichere) Restbetriebszeit des elektromechanischen Fügesystems bis zu einem erforderlichen Austausch einer verschlissenen Komponente zu ermitteln bzw. auf die mögliche Lebensdauer der entsprechenden Komponente zu schliessen.

Grundsätzlich kann die Kontrolleinrichtung im elektrischen Antrieb angeordnet sein, oder aber die Kontrolleinrichtung ist extern vom elektrischen Antrieb, beispielsweise in einem externen Computer angeordnet. Vorzugsweise ist die Kontrolleinrichtung integrativer Bestandteil einer Steuereinrichtung des elektrischen Antriebs. Der externe Computer kann irgendwo auf der Erde angeordnet sein. Die Ist-Werte des elektrischen Antriebs und die weiterer Messwerte des Sensors können dann dem externen Computer dann als digitale Daten über ein Netzwerk wie dem Internet zugeführt werden.

Die Erfindung umfasst weiterhin ein elektromechanisches Fügesystem mit einem elektrischen Antrieb, der mittels eines Gewindetriebs auf ein drehbar oder linear beweglich ausgebildetes Abtriebselement für einen Fügeprozess wirkt. Das elektromechanische Fügesystem zeichnet sich weiterhin durch erste Mittel zur Erfassung von Ist-Werten des elektrischen Antriebs und zweite Mitteln zur Erfassung weiterer Messwerte eines Sensors zur Messung von zeitlichen Kraft- oder Drehmomentverläufen während des Fügeprozesses aus. Das elektromechanische Fügesystem weist eine Kontrolleinrichtung auf, der die Ist-Werte und die weiteren Messwerte zuführbar sind. Weiterhin hat die Kontrolleinrichtung einen Algorithmus, der dazu ausgebildet ist, die Ist-Werte und die weiteren Messwerte nach einem soweit beschriebenen, erfindungsgemässen Verfahren miteinander zu verknüpfen.

In konkreter konstruktiver Ausgestaltung des elektromechanischen Fügesystems ist es vorgesehen, dass der elektrische Antrieb als Servoantrieb ausgebildet ist, dass der Servoantrieb eine Kontrolleinrichtung zur Steuerung des elektrischen Antriebs aufweist.

## Kurze Beschreibung der Figuren

Weitere Vorteile, Merkmale und Einzelheiten der Erfindung ergeben sich aus der nachfolgenden Beschreibung bevorzugter Ausführungsbeispiele sowie anhand der Figuren. Es zeigen

Fig. 1 eine Ansicht in Perspektive eines Teiles einer Ausführungsform eines elektrischen Antriebs eines elektromechanischen Fügesystems zum Fügen zweier Bauteile;

Fig. 2 eine erste Ausführungsform eines elektromechanischen Fügesystems zum Fügen zweier Bauteile, mit einem elektrischen Antrieb gemäss Fig. 1, das dazu ausgebildet ist, in einer schematischen Darstellung, mit einer in einem elektrischen Antrieb integrierten Kontrolleinrichtung zum Ausführen des erfindungsgemässen Verfahrens;

Fig. 3 eine zweite Ausführungsform eines elektromechanischen Fügesystems zum Fügen zweier Bauteile, mit einem elektrischen Antrieb gemäss Fig. 1, das dazu ausgebildet ist, in einer schematischen Darstellung, mit einer externen Kontrolleinrichtung zum Ausführen des erfindungsgemässen Verfahrens; und

Fig. 4 und Fig. 5 jeweils Darstellungen eines Wirkungsgrads- bzw. eines Lebensdauerverlaufs des elektromechanischen Fügesystems gemäss Fig. 2 oder 3 als Ergebnis einer Zustandsanalyse, die von der Kontrolleinrichtung mittels eines Algorithmus durchgeführt wird.

## Wege zur Ausführung der Erfindung

Gleiche Elemente bzw. Elemente mit gleicher Funktion sind in den Figuren mit den gleichen Bezugsziffern versehen.

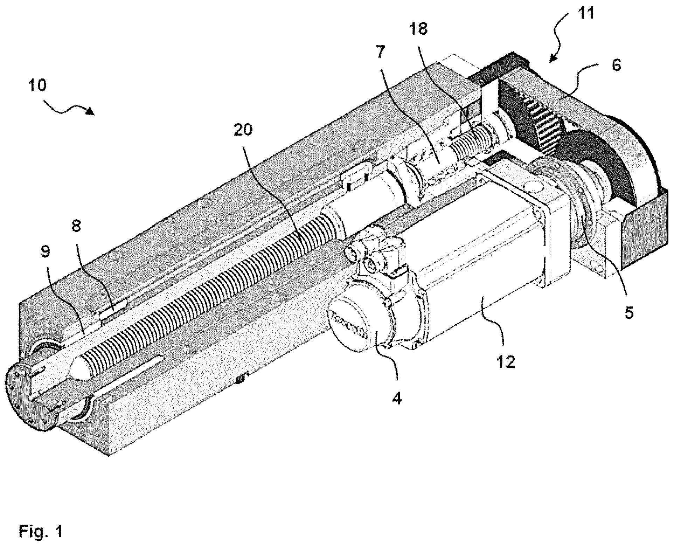

Fig. 1 zeigt in Perspektive einen Teil einer Ausführungsform eines elektrischen Antriebs 10 eines elektromechanischen Fügesystems 100 zum Fügen zweier Bauteile. Vorteilhafterweise weist der elektrische Antrieb 10 einen Servomotor 12 und eine Bremse 4 auf. Die Hauptaufgabe der Bremse 4 ist es, bei nicht bestromten Servomotor 12 einen Stössel vom Gewindetrieb 20 hochgenau in einer Position zu halten. Eine weitere Aufgabe der Bremse 4 ist es, den Servomotor 12 abzubremsen. Der Servomotor 12 treibt über ein Getriebe 5 und einen Riementrieb 6 eine Antriebswelle 18 an. Die Antriebswelle 18 wird von mindestens einem Lager 7 gelagert. Der Servomotor 12 dreht die Antriebswelle 18 mit einer Drehzahl n im Uhrzeigersinn oder gegen den Uhrzeigersinn. Ein Absolutwertgeber 11 erfasst die Drehzahl n der Antriebswelle 18. Vorzugsweise ist der Absolutwertgeber 11 räumlich nahe der Bremse 4 oder des Servomotors 12 angeordnet. In Fig. 1 ist der Absolutwertgeber 11 figürlich nicht dargestellt. Bei Kenntnis der vorliegenden Erfindung kann der Servomotor die Antriebswelle auch getriebelos und riemenlos antreiben.

Der elektrische Antrieb 10 weist einen Gewindetrieb 20 auf. Der Gewindetrieb 20 umfasst eine Gewindespindel mit einer Spindelmutter, eine Führung 8 und eine Verdrehsicherung 9. Die Spindelmutter sitzt auf der Gewindespindel. Die Gewindespindel weist ein Aussengewinde auf, die Spindelmutter weit ein Innengewinde auf, Aussengewinde und Innengewinde sind passend zueinander geschnitten. Ein Ende der Antriebswelle 18 ist drehfest mit der Gewindespindel verbunden und dreht die Gewindespindel. Eine Drehbewegung der Gewindespindel resultiert in einer Linearbewegung der Gewindemutter. Die Führung 9 führt die Gewindemutter bei der Linearbewegung. Ein von der Antriebswelle 18 abgewandtes Ende der Gewindemutter weist einen Stössel auf. Der Stössel dient der Werkzeugaufnahme, in in Fig. 1 ist ein solches Werkzeug figürlich nicht dargestellt. Die Verdrehsicherung 8 sichert den Stössel gegen Verdrehung.

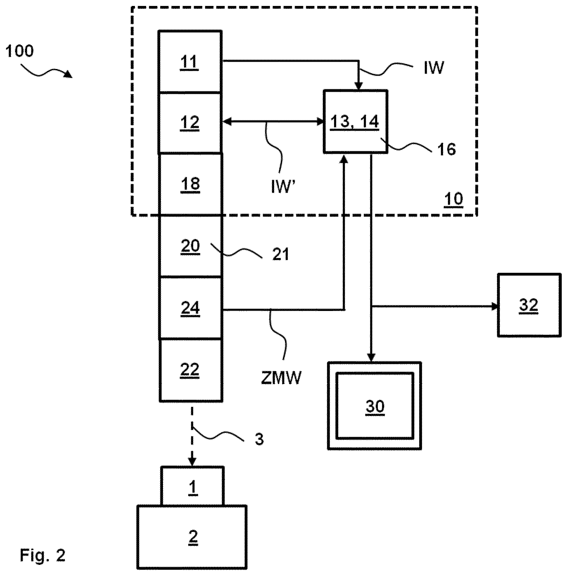

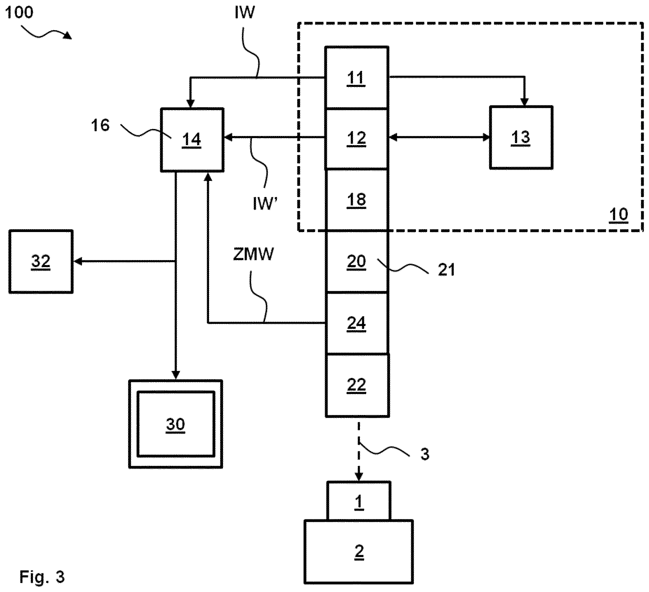

In Fig. 2 und 3 sind schematisch stark vereinfacht zwei Ausführungsformen eines elektromechanischen Fügesystems 100 zum Fügen zweier Bauteile 1, 2 dargestellt. Beispielhaft soll mit dem elektromechanischen Fügesystem 100 ein erstes Bauteil 1 in eine Öffnung eines zweiten Bauteils 2 in Richtung des Pfeils 3 bis zu einer bestimmten Stellung eingepresst werden.

Das elektromechanische Fügesystem 100 weist einen elektrischen Antrieb 10 gemäss Fig. 1 auf. Der elektrische Antrieb 10 wird von einer Steuereinrichtung 13 angesteuert. Vorteilhafterweise ist der elektrische Antrieb 10 ein Servoantrieb mit einem Servomotor 12 und die Steuereinrichtung 13 ist ein Servoverstärker. Die Steuereinrichtung 13 ist ein Computer. Die Ansteuerung des Servomotors 12 durch die Steuereinrichtung 13 ist in Fig. 2 und 3 durch einen Doppelpfeil gekennzeichnet. Ein Gehäuse des elektrischen Antriebs 10 ist in Fig. 2 und 3 gestrichelt gezeichnet. Servomotor 12, Steuereinrichtung 13, Antriebswelle 18 und Absolutwertgeber 11 sind im Gehäuse angeordnet.

Verschleissbehaftet im Sinne der Erfindung bedeutet, dass beispielsweise durch Abrieb bzw. sich vergrössernde Toleranzen zwischen Komponenten des elektromechanischen Fügesystems 100 über die Lebensdauer des elektromechanischen Fügesystems 100 sich der Wirkungsgrad des elektromechanischen Fügesystems 100 verringert. D.h., dass zur Erzielung ein und desselben Resultats an einem Abtriebselement 22, das mit dem Gewindetrieb 20 in Wirkverbindung steht und den eigentlichen Fügeprozess ausführt, eine erhöhte elektrische Energie am elektrischen Antrieb 10 erforderlich ist. Das angesprochene Abtriebselement 22 ist in Wirkverbindung mit dem in das Bauteil 2 einzupressenden ersten Bauteil 1.

Das elektromechanische Fügesystem 100 weist verschiedene verschleissbehaftete Komponenten 21 wie die Bremse 4, das Getriebe 5, den Riementrieb 6, das Lager 7, die Führung 8, die Verdrehsicherung 9, usw. auf.

- So kann die Bremse 4 nicht so wie in der Gebrauchsanweisung vorgeschrieben im Gehäuse eingebaut sein und im Betrieb schleifen, was zu erhöhtem Abrieb vom Bremsbelag führt. Oder die Bremse 4 kann anders als in der Gebrauchsanweisung vorgeschrieben elektrisch mit der Steuereinrichtung 13 kontaktiert sein, was sich in übermässig hohen Bremskräften äussert und wiederum zu erhöhtem Abrieb vom Bremsbelag führt.

- Das Getriebe 5 weist Öl auf, das unzulässig aufgrund hoher Betriebstemperaturen frühzeitig altern kann.

- Auch ist der Riementrieb 6 einem Verschleiss unterworfen. Der Riementrieb 6 weist einen Riemen und Riemenräder auf, welche Riemenräder über Lager gelagert sind. Der Riemen kann nicht vorschriftsmässig auf den Riemenrädern sitzen, was zu erhöhtem Abrieb vom Riemenmaterial führt. Die Riemenräder können unrund drehen sein, was in frühzeitiger Abnutzung der Lager resultiert.

- Ähnliches gilt für das Lager 7 der Antriebswelle 18. Auch das Lager 7 kann sich aufgrund von Überlast oder Beschädigung frühzeitig abnutzen.

- Und die Führung 8 kann im Betrieb verschmutzen, was zu erhöhtem Reibwiderstand an Führungsflächen der Führung 8 führt und eine frühzeitige Abnutzung der Führungsflächen zur Folge hat.

- Schliesslich ist auch die Verdrehsicherung 9 im Betrieb hohen Kräften ausgesetzt und kann sich aufgrund von Überlast oder Beschädigung frühzeitig abnutzen.

Weiterhin ist das Abtriebselement 22 in Wirkverbindung mit einem Sensor 24 angeordnet. Der Sensor 24 dient dazu, eine während des Fügeprozesses des Bauteils 1 vom Abtriebselement 22 aufgebrachte Kraft oder ein Drehmoment (je nach Art des Fügeprozesses) zu ermitteln. Der Sensor 24 kann eine Dehnungsmessstreifen oder ein piezoelektrischer Sensor sein. Der Sensor 24 kann im Stössel integriert sein oder am Stössel angebracht sein. Der vom Sensor 24 ermittelte Wert für die Kraft oder das Drehmoment stellt einen zusätzlichen Messwert ZMW dar und wird von dem Sensor 24 einer Überwachungseinrichtung 30 als Eingangsgrösse zugeführt. Bei Kenntnis der vorliegenden Erfindung kann der Fachmann auch einen Sensor zur Ermittlung eines vom Abtriebselement 22 aufgebrachten Drucks verwenden.

Ebenfalls wird von der Steuereinrichtung 13 des Servomotors 12 wenigstens ein Ist-Wert IW, IW' des elektrischen Antriebs 10 als Eingangsgrösse zugeführt. Ein Ist-Wert IW ist eine Drehzahl n der Antriebswelle 18 oder ein Ist-Wert IW' ist eine erforderliche Stromstärke I des Servomotors 12.

Sowohl die Ist-Werte IW, IW' des elektrischen Antriebs 10 als auch die zusätzlichen Messwerte ZMW des Sensors 24 werden jeweils zum selben Zeitpunkt während des Fügeprozesses ermittelt und der Kontrolleinrichtung 14 zugeführt.

Erfindungsgemäss ist eine Kontrollvorrichtung 14 vorgesehen. Gemäss Fig. 2 ist die Kontrolleinrichtung 14 im elektrischen Antrieb 10 angeordnet. Vorzugsweise ist die Kontrolleinrichtung 14 integrativer Bestandteil der Steuereinrichtung 13. Gemäss Fig. 3 ist die Kontrolleinrichtung 14 ausserhalb des elektrischen Antriebs 10 als externer Computer ausgebildet. Die Kontrolleinrichtung 14 weist einen Algorithmus 16 auf, der dazu ausgebildet ist, die Ist-Werte IW, IW' des elektrischen Antriebs 10 mit den zusätzlichen Messwerten ZMW des Sensors 24 zu verknüpfen. Das Ergebnis der Verknüpfung dient einer Zustandsanalyse des elektromechanischen Fügesystems 100, die dazu dient, einen sich anbahnenden Verschleiss und daher einen sich anbahnenden Ausfall bzw. einen erforderlichen Austausch einer verschleissbehafteten Komponente 21 rechtzeitig zu erfassen. Vorzugsweise erfolgt die Verknüpfung der Ist-Werte IW, IW' des elektrischen Antriebs 10 mit den zusätzlichen Messwerten ZMW des Sensors 24 in Echtzeit. Für die Belange der vorliegenden Erfindung wird Echtzeit so definiert, dass ein Ergebnis der Verknüpfung in der Kontrolleinrichtung 14 zeitlich schneller verfügbar ist, als die Zuführung der Ist-Werte IW, IW' des elektrischen Antriebs 10 und der zusätzlichen Messwerte ZMW des Sensors 24 zeitliche dauert.

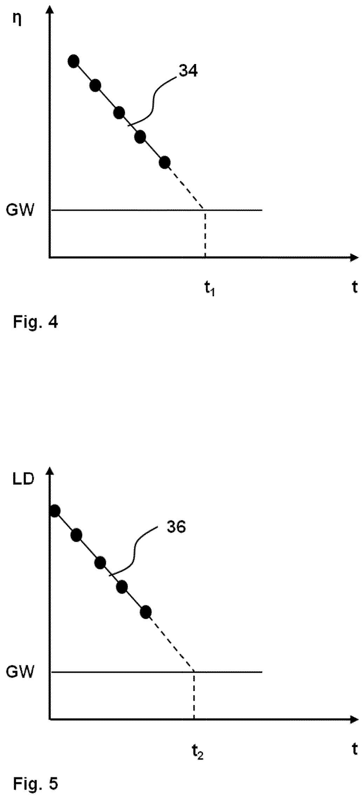

In der Fig. 4 ist ein Diagramm des Wirkungsgrads η über der Zeit t über eine längere Betriebsdauer des elektromechanischen Fügesystems 100 dargestellt. Eine Kurve 34 verbindet dabei die einzelnen Zeitpunkte, zu denen jeweils die entsprechenden Ist-Werte IW, IW' des elektrischen Antriebs 10 sowie der zusätzlichen Messwerte ZMW des Sensors 24 der Kontrolleinrichtung 14 zugeführt wurden. Der Algorithmus 16 hat als Wirkungsgrad η zu den jeweiligen Zeitpunkten einen Quotient zwischen den Ist-Werten IW, IW' des elektrischen Antriebs 10 und den zusätzlichen Messwerten ZMW des Sensors 24 ermittelt. Weiterhin erkennt man ab dem gestrichelt dargestellten zeitlichen Verlauf der Kurve 34 eine Extrapolation für die Zukunft.

Insbesondere erkennt man, dass die Grösse des Wirkungsgrads η mit zunehmender Zeitdauer t abnimmt. Ein Grenzwert GW kennzeichnet eine Schwelle, zu der es sich beispielsweise aus wirtschaftlicher Sicht lohnt, infolge des abnehmenden Wirkungsgrads η bzw. des sich abzeichnenden Verschleisses einer verschleissbehafteten Komponente 21 - bevor der Verschleiss zu einer ungewollten Unterbrechung des Betriebs des elektromechanischen Fügesystems 100 führt - eine verschlissene Komponente des elektromechanischen Fügesystems 100 auszutauschen. Der Zeitpunkt $t_1$, zu dem der Grenzwert GW erreicht sein wird, kann von dem Algorithmus 16 hochgerechnet werden. Der Zeitpunkt $t_1$ wird Lebensdauer der verschleissbehafteten Komponente 21 genannt.

In der Fig. 5 ist demgegenüber ein Kurvenverlauf 36 dargestellt, der die zu erwartende restliche Lebensdauer LD des elektromechanischen Fügesystems 100 über die Zeit t darstellt. Hierbei wurden mittels des Algorithmus 16 mittels einer Lebensdauerformel die Ist-Werte IW, IW' des elektrischen Antriebs 10 sowie die zusätzlichen Messwerte ZMW des Sensors 24 verwendet, wobei die Lebensdauerformel ggf. noch weitere Faktoren bzw. Werte umfasst, die ggf. mittels weiterer Messwerte bzw. Angaben ermittelt werden müssen.

Beispielsweise lässt sich aus Ist-Werten IW der vom Absolutwertgeber 11 gemessenen Drehzahlen n der Antriebswelle 18 und zusätzlichen Messwerten ZMW von vom Sensor 24 gemessenen Kräften F eine Lebensdauer LD gemäss der folgenden Lebensdauerformel ermitteln:

$$LD \sim B^{-\frac{1}{3}} = \frac{\sum_i^m q_i}{\sum_i^m q_i n_i F_i^3}$$

Demnach ist die Lebensdauer LD umgekehrt proportional zur dritten Potenz einer mittleren Belastung B während einer Anzahl von m Betriebseinsätzen, wobei i der Index der einzelnen Betriebseinsätze ist. Mit $q_i$ wird eine zeitliche Länge einer Betriebszeiten bezeichnet. Und $n_i$ gibt eine mittlere, während einer Betriebszeit gemessene Drehzahl wieder. Schliesslich ist $F_i$ eine mittlere, während einer Betriebszeit gemessene Kraft.
Bei Kenntnis der vorliegenden Erfindung kann der Fachmann auch eine andere Lebensdauerformel verwenden.

So kann er eine Lebensdauer $LD_{10}$ verwenden, welche von 90% der verschleissbehafteten Komponenten erreicht wird, oder er verwendet eine Lebensdauer $LD_5$, welche von 95% der verschleissbehafteten Komponenten erreicht wird. Auch hier gilt:

$$LD_{10} = K_{10} \, B^{-\frac{1}{3}}$$

$$LD_5 = K_5 \, B^{-\frac{1}{3}}$$

Wobei $K_{10}$ und $K_5$ experimentell ermittelte Proportionalitätsfaktoren sind.

Auch hier ist ein kritischer Grenzwert GW und das Erreichen des Grenzwerts GW zum Zeitpunkt $t_2$ mittels des Algorithmus 16 vorausrechenbar. Der Zeitpunkt $t_2$ wird Lebensdauer des elektromechanischen Fügesystems 100 genannt.

Die in den Fig. 4 und 5 dargestellten Kurvenverläufe 34, 36 lassen sich beispielsweise an einer mit der Kontrolleinrichtung 16 verbundenen Anzeigeeinrichtung 30, insbesondere einem Bildschirm, darstellen. Weiterhin können die Kurvenverläufe 34, 36 bzw. die sich aus den Kurvenverläufen 34, 36 ergebenen Zahlenwerte sowie die zugrundeliegenden Ist-Werte des elektrischen Antriebs 10 bzw. die zusätzlichen Messwerte des Sensors 24 auch mittels eines Speichermediums 32 abspeichern. Vorzugsweise ist das Speichermedium 32 ein Transducer Electronic Data Sheet (TEDS) gemäss dem Standard IEEE 1451.4.

**Bezugszeichenliste**

| 1  | Bauteil |
|----|---------|
| 2  | Bauteil |
| 3  | Pfeil |
| 4  | Bremse |
| 5  | Getriebe |
| 6  | Riementrieb |
| 7  | Lager |
| 8  | Verdrehsicherung |
| 9  | Führung |
| 10 | elektrischer Antrieb |
| 11 | Absolutwertgeber |
| 12 | Servomotor |
| 13 | Steuereinrichtung |
| 14 | Kontrolleinrichtung |
| 16 | Algorithmus |
| 18 | Antriebswelle |
| 20 | Gewindetrieb |
| 21 | verschleissbehaftete Komponente |
| 22 | Abtriebselement |
| 24 | Sensor |
| 30 | Anzeigeeinrichtung |
| 32 | Speichermedium |

| | |
|---|---|
| 34 | Kurvenverlauf |
| 36 | Kurvenverlauf |
| 100 | elektromechanisches Fügesystem |
| LD | Lebensdauer |
| GW | Grenzwert |
| t | Zeit |
| $t_1$ | berechnete Lebensdauer der verschleissbehafteten Komponente |
| $t_2$ | berechnete Lebensdauer des elektromechanischen Fügesystems bzw. des Gewindetriebs |
| IW | Ist-Wert Drehzahl der Antriebswelle |
| IW' | Ist-Wert Stromstärke des Servomotors |
| ZMW | zusätzlicher Messwert |
| $\eta$ | Wirkungsgrad |

**Patentansprüche**

1. Verfahren zur Zustandsanalyse eines elektromechanischen Fügesystems (100); wobei durch einen elektrischen Antrieb (10) mittels eines Gewindetriebs (20) eine Ausgangskraft oder eine Ausgangsdrehmoment für einen durch das elektromechanische Fügesystem (100) durchgeführten Fügeprozess erzeugt wird, welcher Antrieb (10) einen Servomotor (12) aufweist, welcher Servomotor (12) über ein Getriebe (5) und einen Riementrieb (6) eine Antriebswelle (18) antreibt; wobei einer Kontrolleinrichtung (14) Ist-Werte (IW, IW') des elektrischen Antriebs (10) als Eingangsgrösse zugeführt werden, wobei ein Ist-Wert (IW, IW') eine Drehzahl (n) der Antriebswelle (18) oder eine erforderliche Stromstärke des Servomotors (12) ist; wobei von einem Sensor (24) zusätzliche Messwerte (ZMW) ermittelt werden, welcher Sensor (24) zur Messung von zeitlichen Kraft- oder Drehmomentverläufen während des Fügeprozesses dient; wobei der Kontrolleinrichtung (14) die zusätzlichen Messwerte (ZMW) als Eingangsgrösse zugeführt werden, wobei die Ist-Werte (IW, IW') des elektrischen Antriebs (10) als auch die zusätzlichen Messwerte (ZMW) des Sensors (24) zum selben Zeitpunkt während des Fügeprozesses ermittelt und der Kontrolleinheit (14) zugeführt werden; wobei die Kontrolleinrichtung (14) mittels eines Algorithmus (16) die Ist-Werte (IW, IW') mit den zusätzlichen Messwerten (ZMW) verknüpft, wobei der Algorithmus (16) einen Wirkungsgrad ($\eta$) aus den Quotienten von Ist-Werten (IW, IW') und zusätzlichen Messwerten (ZMW) bildet; und wobei die Kontrolleinrichtung (14) aus dieser Verknüpfung einen sich anbahnenden Verschleiss einer verschleissbehafteten Komponente (21) des elektromechanischen Fügesystems (100) detektiert.

2. Verfahren nach Anspruch 1, **dadurch gekennzeichnet, dass** die Ist-Werte (IW, IW') und die zusätzlichen Messwerte (ZMW) vom Algorithmus (16) lediglich während eines Teils der Zeitdauer des Fügeprozesses berücksichtigt werden, wobei während der berücksichtigten Zeitdauer die Ist-Werte (IW, IW') vorzugsweise zumindest nahezu konstant sind.

3. Verfahren nach Anspruch 1, **dadurch gekennzeichnet, dass** die Ist-Werte (IW, IW') und die zusätzlichen Messwerte (ZMW) von dem Algorithmus (16) während eines zusätzlichen Betriebs ausserhalb des Fügeprozesses berücksichtigt werden, insbesondere während eines Betriebs des elektromechanischen Fügesystems (100), in der das elektromechanische Fügesystem (100) nicht kraft- oder drehmomentbeaufschlagt ist.

4. Verfahren nach einem der Ansprüche 1 bis 3, **dadurch gekennzeichnet, dass** der Algorithmus (16) jeweils zu gleichen Zeitpunkten an die Kontrolleinrichtung (14) übermittelte Ist-Werte (IW, IW') und der zusätzlichen Messwerte (ZMW) miteinander verknüpft.

5. Verfahren nach einem der Ansprüche 1 bis 4, **dadurch gekennzeichnet, dass** der Algorithmus (16) Ist-Werte (IW, IW') und die zusätzlichen Messwerte (ZMW) während einer konstanten Drehwinkelgeschwindigkeit des elektrischen Antriebs (10) berücksichtigt.

6. Verfahren nach einem der Ansprüche 1 bis 5, **dadurch gekennzeichnet, dass** der Algorithmus (16) als Ist-Werte (IW) Werte einer Drehbewegung einer auf den Gewindetrieb (20) wirkenden Antriebswelle (18) des elektrischen Antriebs (20) verwendet, oder dass der Algorithmus (32) als Ist-Werte (IW') Werte der Stromaufnahme (I) eines Servomotors (12) des elektrischen Antriebs (10) verwendet.

7. Verfahren nach einem der Ansprüche 1 bis 6, **dadurch gekennzeichnet, dass** die Kontrolleinrichtung (14) einen zeitlichen Verlauf der Verknüpfung der Ist-Werte (IW, IW') mit den zusätzlichen Messwerten (ZMW) bildet.

8. Verfahren nach Anspruch 7, **dadurch gekennzeichnet, dass** die Kontrolleinrichtung (14) den zeitlichen Verlauf der Verknüpfung der Ist-Werte (IW, IW') mit den zusätzlichen Messwerten (ZMW) für die Zukunft extrapoliert.

9. Verfahren nach Anspruch 7 oder 8, **dadurch gekennzeichnet, dass** die Kontrolleinrichtung (14) eine verbleibende Zeitdauer bis zu einem erforderlichen Austausch der wenigstens einen verschleissbehafteten Komponente (21) des elektromechanischen Fügesystems (100) bzw. eine Lebensdauer (LD) des elektromechanischen Fügesystems (100) ermittelt.

10. Verfahren nach einem der Ansprüche 7 bis 9, **da-**

**durch gekennzeichnet, dass** die Ergebnisse der Verknüpfung der Verknüpfung der Ist-Werte (IW, IW') mit den zusätzlichen Messwerten (ZMW) in einem Speichermedium (32) des elektromechanischen Fügesystems (100) abgespeichert werden.

11. Elektromechanisches Fügesystem (100), mit einem elektrischen Antrieb (10), welcher Antrieb (10) mittels eines Gewindetriebs (20) auf ein drehbar oder linearbeweglich ausgebildetes Abtriebselement (22) für einen Fügeprozess wirkt, welcher Antrieb (10) einen Servomotor (12) aufweist, welcher Servomotor (12) über ein Getriebe (5) und einen Riementrieb (6) eine Antriebswelle (18) antreibt, mit ersten Mitteln zur Erfassung von Ist-Werten (IW, IW') des elektrischen Antriebs (10) und zweiten Mitteln zur Erfassung zusätzlicher Messwerte (ZMW) mittels eines Sensors (24) zur Messung von zeitlichen Kraft- oder Drehmomentverläufen während des Fügeprozesses, wobei ein Ist-Wert (IW, IW') eine Drehzahl (n) der Antriebswelle (18) oder eine erforderliche Stromstärke des Servomotors (12) ist, und mit einer Kontrolleinrichtung (14), der die Ist-Werte (IW, IW') und die zusätzlichen Messwerte (ZMW) zuführbar sind, wobei die ersten Mittel die Ist-Werte (IW, IW') des elektrischen Antriebs (10) und die zweiten Mittel die zusätzlichen Messwerte (ZMW) des Sensors (24) zum selben Zeitpunkt während des Fügeprozesses erfassen und der Kontrolleinheit (14) zuführen; wobei die Kontrolleinrichtung (14) einen Algorithmus (16) umfasst, der dazu ausgebildet ist, die Ist-Werte (IW, IW') und die zusätzlichen Messwerte (ZMW) nach einem Verfahren nach einem der Ansprüche 1 bis 10 miteinander zu verknüpfen, wobei der Algorithmus (16) einen Wirkungsgrad ($\eta$) aus den Quotienten von Ist-Werten (IW, IW') und zusätzlichen Messwerten (ZMW) bildet.

12. Elektromechanisches Fügesystem nach Anspruch 11, **dadurch gekennzeichnet, dass** eine Steuereinrichtung (13) den elektrischen Antrieb (10) ansteuert.

13. Elektromechanisches Fügesystem nach Anspruch 11 oder 12, **dadurch gekennzeichnet, dass** ein Speichermedium (32) zum Abspeichern der von der Kontrolleinrichtung (14) durchgeführten Verknüpfungen der Ist-Werte (IW, IW') mit den zusätzlichen Messwerten (ZMW) vorgesehen ist.

14. Elektromechanisches Fügesystem nach einem der Ansprüche 11 bis 13, **dadurch gekennzeichnet, dass** die Kontrolleinrichtung (14) im elektrischen Antrieb (10) angeordnet ist oder dass die Kontrolleinrichtung (14) ausserhalb des elektrischen Antriebs (10) angeordnet ist.

**Claims**

1. A method for analyzing the status of an electromechanical joining system (100) wherein an output force or output torque for a joining method carried out by the electromechanical joining system (100) is generated by an electrical drive (10) by means of a screw drive (20), which drive (10) comprises a servo motor (12), which servo motor (12) drives a drive shaft (18) by means of a gear (5) and a belt drive (6); wherein a monitoring device (14) is supplied with actual values (IW, IW') of the electrical drive (10) as input variables, wherein an actual value (IW, IW') is a rotational speed (n) of the drive shaft (18) or a required current of the servo motor (12); wherein a sensor (24) determines additional measurement values (ZMW), which sensor (24) is used to measure the course of forces or torques over time during the joining method; wherein the monitoring device (14) is supplied with the additional measurement values (ZMW) as input variable, wherein the actual values (IW, IW') of the electrical drive (10) as well as the additional measurement values (ZMW) of the sensor (24) are determined at the same point of time in the joining process and transmitted to the monitoring device (14); wherein the monitoring device (14) uses an algorithm (16) to link the actual values (IW, IW') with the additional measurement values (ZMW); wherein the algorithm (16) calculates an efficiency ($\eta$) from the ratio of the actual values (IW, IW') and the additional measurement values (ZMW); and wherein the monitoring device (14) uses this linkage to detect upcoming wear of a wear-prone component (21) of the electromechanical joining system (100).

2. The method according to claim 1, **characterized in that** the algorithm (16) uses the actual values (IW, IW') and the additional measurement values (ZMW) only during part of the time period the joining method takes, wherein preferably during that period the actual values (IW, IW') are at least nearly constant.

3. The method according to claim 1, **characterized in that** the algorithm (16) uses the actual values (IW, IW') and the additional measurement values (ZMW) during an additional operation outside of the joining method, in particular during an operation of the electromechanical joining system (100) where no force or torque acts on the electromechanical joining system (100).

4. The method according to any of the claims 1 to 3, **characterized in that** the algorithm (16) links actual values (IW, IW') and additional measurement values (ZMW) with one another that are transmitted to the monitoring device (14) at the same time.

5. The method according to any of the claims 1 to 4, **characterized in that** the algorithm (16) uses actual values (IW, IW') and additional measurement values (ZMW) during a constant rotational angular speed of the electrical drive (10).

6. The method according to any of the claims 1 to 5, **characterized in that** the algorithm (16) uses amounts of a rotary movement of a drive shaft (18) of the electrical drive (20) acting on the screw drive (20) as the actual values (IW) or the algorithm (32) uses amounts of the power consumption (I) of a servo drive (12) of the electrical drive (10) as the actual values (IW').

7. The method according to any of the claims 1 to 6, **characterized in that** the monitoring device (14) calculates a time course of the linkage of the actual values (IW, IW') and the additional measurement values (ZMW).

8. The method according to claim 7, **characterized in that** the monitoring device (14) extrapolates the time course of the linkage of the actual values (IW, IW') and the additional measurement values (ZMW) into the future.

9. The method according to claim 7 or 8, **characterized in that** the monitoring device (14) determines an amount of time remaining until the at least one wear-prone component (21) of the electromechanical joining system (100) must be replaced or a service life (LD) of the electromechanical joining system (100), respectively.

10. The method according to any of the claims 8 to 10, **characterized in that** the results of the linkage of linking the actual values (IW, IW') with the additional measurement values (ZMW) are stored in a storage medium (32) of the electromechanical joining system (100).

11. An electromechanical joining system (100) comprising an electrical drive (10), which electrical drive (10) acts by means of a screw drive (20) on a rotatable or linearly movable output element (22) for performing a joining method, which drive (10) comprises a servo motor (12), which servo motor (12) drives a drive shaft (18) by means of a gear (5) and a belt drive (6), comprising first means of detecting actual values (IW, IW') of the electrical drive (10) and second means of detecting additional measurement values (ZMW) by means of a sensor (24) for measuring the course of forces or torques over time during the joining method, wherein an actual value (IW, IW') is a rotational speed (n) of the drive shaft (18) or a required current of the servo motor (12), and comprising a monitoring device (14) which may be supplied by the actual values (IW, IW') and the additional measurement values (ZMW), wherein the first means determine the actual values (IW, IW') of the electrical drive (10) and the second means determine the additional measurement values (ZMW) of the sensor (24) at the same point of time in the joining process and transmit them to the monitoring device (14); wherein the monitoring device (14) comprises an algorithm (16) designed to link the actual values (IW, IW') and the additional measurement values (ZMW) with one another according to a method as defined in any of the claims 1 to 10; wherein the algorithm (16) calculates an efficiency ($\eta$) from the ratio of the actual values (IW, IW') and the additional measurement values (ZMW).

12. The electromechanical joining system according to claim 11, **characterized in that** a control device (13) controls the electrical drive (10).

13. The electromechanical joining system according to claim 11 or 12, **characterized in that** a storage medium (32) for storing the linkage of the actual values (IW, IW') with the additional measurement values (ZMW) that is carried out by the monitoring device (14) is provided.

14. The electromechanical joining system according to any of the claims 11 to 13, **characterized in that** the monitoring device (14) is arranged in the electrical drive (10) or **in that** the monitoring device (14) is positioned outside the electrical drive (10).

**Revendications**

1. Procédé d'analyse de l'état d'un système d'assemblage électromécanique (100), dans lequel une force de sortie ou un couple de sortie pour un processus d'assemblage effectué par le système d'assemblage électromécanique (100) est généré par un entraînement électrique (10) au moyen d'un entraînement à vis (20) ; ledit entraînement (10) comprenant un servomoteur qui entraîne un arbre d'entraînement (18) par l'intermédiaire d'une transmission (5) et d'un entraînement par courroie (6) ; dans lequel des valeurs réelles (IW, IW') de l'entraînement électrique (10) sont fournies à un dispositif de commande (14) en tant que variable d'entrée, une valeur réelle (IW, IW') étant une vitesse de rotation (n) de l'arbre d'entraînement (18) ou un courant requis pour le servomoteur (12) ; dans lequel des valeurs de mesure supplémentaires (ZMW) sont déterminées par un capteur (24), lequel capteur (24) sert à mesurer l'évolution des forces ou des couples dans le temps au cours du processus d'assemblage ; dans lequel les valeurs de mesure supplémentaires (ZMW) sont fournies au dispositif de commande (14) en tant que variable d'entrée, dans lequel les valeurs réelles (IW, IW') de l'entraînement électrique (10) aussi bien que les valeurs de mesure supplémentaires (ZMW) du capteur (24) sont déterminées en même temps au cours du processus d'assemblage et alimentées au dispositif de commande (14) ; dans lequel le dispositif de commande (14) relie les valeurs réelles (IW, IW') aux valeurs de mesure supplémentaires (ZMW) au moyen d'un algorithme (16), dans lequel l'algorithme (16) calcule un rendement (η) à partir du quotient des valeurs réelles (IW, IW') par les valeurs de mesure supplémentaires (ZMW) ; et dans lequel le dispositif de commande (14) détecte une usure imminente d'un composant sujet à l'usure (21) du système d'assemblage électromécanique (100) à partir de cette relation.

2. Procédé selon la revendication 1, **caractérisé en ce que** l'algorithme (16) n'utilise les valeurs réelles (IW, IW') et les valeurs de mesure supplémentaires (ZMW) que pendant une partie de la durée du processus d'assemblage, les valeurs réelles (IW, IW') étant de préférence au moins presque constantes au cours de la période considérée.

3. Procédé selon la revendication 1, **caractérisé en ce que** l'algorithme (16) prend en compte les valeurs réelles (IW, IW') et les valeurs de mesure supplémentaires (ZMW) pendant une opération supplémentaire en dehors du processus d'assemblage, en particulier pendant une opération du système d'assemblage électromécanique (100) où aucune force ou aucun couple n'agit sur le système d'assemblage électromécanique (100).

4. Procédé selon l'une quelconque des revendications 1 à 3, **caractérisé en ce que** l'algorithme (16) relie les valeurs réelles (IW, IW') et les valeurs de mesure supplémentaires (ZMW) qui sont transmises au dispositif de commande (14) à la même temps.

5. Procédé selon l'une quelconque des revendications 1 à 4, **caractérisé en ce que** l'algorithme (16) prend en compte les valeurs réelles (IW, IW') et les valeurs de mesure supplémentaires (ZMW) pendant une vitesse angulaire de rotation constante de l'entraînement électrique (10).

6. Procédé selon l'une quelconque des revendications 1 à 5, **caractérisé en ce que** l'algorithme (16) utilise des valeurs d'un mouvement de rotation d'un arbre d'entraînement (18) de l'entraînement électrique (20) agissant sur l'entraînement à vis (20) comme valeurs réelles (IW) ou l'algorithme (32) utilise des valeurs de la consommation d'énergie (I) d'un servomoteur (12) de l'entraînement électrique (10) comme valeurs réelles (IW').

7. Procédé selon l'une quelconque des revendications 1 à 6, **caractérisé en ce que** le dispositif de commande (14) calcule une évolution temporelle de la relation entre les valeurs réelles (IW, IW') et les valeurs de mesure supplémentaires (ZMW).

8. Procédé selon la revendication 7, **caractérisé en ce que** le dispositif de commande (14) extrapole dans le futur l'évolution temporelle de la relation entre les valeurs réelles (IW, IW') et les valeurs de mesure supplémentaires (ZMW).

9. Procédé selon la revendication 7 ou 8, **caractérisé en ce que** le dispositif de commande (14) détermine respectivement le temps restant jusqu'à ce qu'au moins un composant sujet à l'usure (21) du système d'assemblage électromécanique (100) doive être remplacé ou une durée de vie (LD) du système d'assemblage électromécanique (100).

10. Procédé selon l'une quelconque des revendications 7 à 9, **caractérisé en ce que** les résultats de la mise en relation de la liaison des valeurs réelles (IW, IW') avec les valeurs de mesure supplémentaires (ZMW) sont stockés dans un support de stockage (32) du système d'assemblage électromécanique (100).

11. Système d'assemblage électromécanique (100) comprenant un entraînement électrique (10), lequel entraînement (120) agit sur un élément d'entraînement configuré pour être rotatif ou mobile linéairement (22) au moyen d'un entraînement à vis (20) pour effectuer un processus d'assemblage, ledit entraînement (10) comprenant un servomoteur (12), lequel servomoteur (12) entraîne un arbre d'entraînement (18) par l'intermédiaire d'une transmission (5) et d'un entraînement par courroie (6), comprenant des premiers moyens de détection des valeurs réelles (IW, IW') de l'entraînement électrique (10) et des seconds moyens de détection des valeurs de mesure supplémentaires (ZMW) au moyen d'un capteur (24) pour mesurer l'évolution des forces ou des couples dans le temps au cours du processus d'assemblage, dans lequel une valeur réelle (IW, IW') est une vitesse de rotation (n) de l'arbre d'entraînement (18) ou un courant requis pour le servomoteur (12), et comprenant un dispositif de commande (14) qui peut être alimenté par les valeurs réelles (IW, IW') et les valeurs de mesure supplémentaires (ZMW), dans lequel les premiers moyens détectent les valeurs réelles (IW, IW') de l'entraînement électrique (10) et les seconds moyens détectent les valeurs de mesure supplémentaires (ZMW) du capteur (24) à la même temps au cours du processus d'assemblage et les fournissent au dispositif de commande (14) ; dans lequel le dispositif de commande (14) comprend un algorithme (16) configuré pour relier les valeurs réelles (IW, IW') aux valeurs de mesure supplémentaires (ZMW) selon un procédé comme défini dans l'une quelconque des revendications 1 à 10, dans lequel l'algorithme (16) calcule un rendement ($\eta$) à partir du quotient des valeurs réelles (IW, IW') par les valeurs de mesure supplémentaires (ZMW) .

12. Système d'assemblage électromécanique selon la revendication 11, **caractérisé en ce qu'**une unité de commande (13) contrôle l'entraînement électrique (10).

13. Système d'assemblage électromécanique selon la revendication 11 ou 12, **caractérisé en ce qu'**un support de stockage (32) pour stocker les liaisons entre les valeurs réelles (IW, IW') et les valeurs de mesure supplémentaires (ZMW) effectuées par le dispositif de commande (14).

14. Système d'assemblage électromécanique selon l'une quelconque des revendications 11 à 13, **caractérisé en ce que** le dispositif de commande (14) est disposé dans l'entraînement électrique (10) ou **en ce que** le dispositif de commande (14) est disposé en dehors de l'entraînement électrique (10).

Fig. 1

Fig. 2

100

IW

16

32

30

ZMW

IW'

11

12

18

20

24

22

13

10

21

3

1

2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005124488 A1
- WO 2016205846 A1